# EUROPEAN PATENT APPLICATION

(11) **EP 2 742 987 A1**
(43) Date of publication of application: **18.06.2014**
(21) Application number: 12197259.0
(22) Date of filing: 14.12.2012
(51) Int. Cl.: B01D 47/02

(54) **An arrangement for cleaning of an exhaust air ductwork and a dust separation unit for an exhaust air ductwork**

(71) Applicant: Team Kantola Service Oy, 20780 Kaarina (FI)
(72) Inventor: Lindholm, Markku, 20780 Kaarina (FI); Kantola, Kari, 20780 Kaarina (FI)
(74) Representative: Kolster Oy Ab

(57) **Abstract**

The present invention relates to an arrangement for cleaning of an exhaust air ductwork and a dust separation unit for an exhaust air ductwork. A dust separation unit according to the present invention comprises a cylinder container (1), (9), (15) and a filtering unit (6-7), (22), (23-26), which said cylinder container (1), (9), (15) has an air inlet (2), (10), (16) suitably arranged in a certain angle at the side of the cylinder container (1), (9), (15), a certain amount of separator liquid (3), (11), (17), e.g. water (3), (11), (17) or purification liquid (3), (11), (17) arranged at the bottom of the cylinder container (1), (9), (15), and an air output element (4-5), (12-13), (18-19), (21) arranged at the top centre of the cylinder container (1), (9), (15); so that dust in the dusty air stream is adhered to evaporated separator liquid (3), (11), (17) droplets in an intense turbulent air stream generated in between the frame of said cylinder container (1), (9), (15) and said air output element (4-5), (12-13), (18-19), (21).

## Description

### FIELD OF THE INVENTION

The present invention relates to the field of air ventilation systems and air conditioning systems used e.g. in homes, in businesses, in hotels, in passenger vessels and in hospitals, and more particularly to an arrangement for cleaning of an exhaust air ductwork and a dust separation unit for an exhaust air ductwork.

### BACKGROUND OF THE INVENTION

Air ventilation systems and air conditioning systems have been long used in homes and businesses to provide fresh air to premises. Typically fresh air is taken from outside and distributed to each room through supply inlet valves. In most applications the outside air is filtered and/or conditioned to ensure fresh air to premises. As there is fresh air coming in through supply inlet valves the exhaust air ductwork of air ventilation system is used to carry the used air from the premises to outside. The exhaust air ductwork is an essential part or the air ventilation system and needs to be kept clean in order to ensure a proper flow of air.

In the typical cleaning and maintenance methods of the exhaust air ductwork the removal and separation of dust e.g. filtering of dust is very problematic as the amounts of dust are quite large due to the large volumes of the exhaust air ductwork. The commonly used filtering units designed to collect the dust are therefore structurally very large in order to achieve a sufficient filtering surface, a sufficient dust binding capacity and a longer filter replacement interval. In the commonly used filtering units the dust binding capacity is quite limited and as the dust quantities are large the filter replacement interval is short and the costs of frequent filter replacement become unwantedly large. Furthermore, in certain environments e.g. in medical facilities, public facilities and homes the use of high quality filters e.g. High-Efficiency Particulate Air (HEPA) filters is required which brings the costs of frequent filter replacement even larger.

In the prior art cleaning methods of the exhaust air ductwork the moving of the large filtering units indoors and even fitting such large filtering units indoors is very problematic. Therefore, in the typical cleaning and maintenance methods of the exhaust air ductwork the hose arrangement transferring the dust from the exhaust air ductwork to the extractor as well as from the extractor to the filtering unit becomes unwantedly long. This in turn requires very efficient extractors with large motors consuming a lot of electrical power. In cold seasons e.g. in winter as the large filtering units need to be left outdoors the hose arrangement needs to be routed through doors or windows. Here the caulking or sealing may require special procedures that may consume more time than the exhaust air ductwork cleaning.

For example, in passenger vessels having long and narrow corridors and cabin doors the above mentioned problems become even worse and therefore the exhaust air ductwork cleaning must be carried out during the scheduled vessel maintenance. The passenger vessels used in non-stop cruise traffic typically stay at port only for a short time necessary for the outgoing passengers to disembark and for the incoming passengers to embark. With these vessels the maintenance duration is typically only few days and the due to time pressure proper exhaust air ductwork cleaning is often found almost impossible to be carried out. Furthermore, with these vessels the maintenance intervals are typically years and the exhaust air ductwork cleaning should definitely be carried more frequently due to the high utilization rate.

There are also dusty and dust generating environments such as for example in industrial manufacturing facilities and industrial laundries where the need for dust separation is essential. The cleaning methods of an exhaust air ductwork in dusty and dust generating environments with typical prior art cleaning methods is very problematic. The amounts of dust are so large that the filtering capacity drops very rapidly and the filters are blocked easily and often need to be changed. The changing of the filters is time consuming and messy.

Commonly used prior art cleaning and maintenance methods of the exhaust air ductwork have proven not to be satisfactory especially in ventilation and air conditioning applications in dusty environments. There is a clear demand in the market for a new type of an arrangement for cleaning of an exhaust air ductwork and for a new type of a dust separation unit for an exhaust air ductwork.

### BRIEF DESCRIPTION OF THE INVENTION

An object of the present invention is thus to provide an arrangement for cleaning of an exhaust air ductwork and for a new type of a dust separation unit for an exhaust air ductwork so as to overcome the above problems and to alleviate the above disadvantages.

The objects of the invention are achieved by an arrangement for cleaning of an exhaust air ductwork, which cleaning arrangement has a duct channel, a suction fan and a dust separation unit, said dust separation unit comprising a cylinder container and a filtering unit, which said cylinder container has:
- an air inlet suitably arranged in a certain angle at the side of the cylinder container,
- a certain amount of separator liquid, e.g. water or purification liquid arranged at the bottom of the cylinder container, and
- an air output element arranged at the top centre of the cylinder container;
so that dust in the dusty air stream is adhered to evaporated separator liquid droplets in an intense turbulent air stream generated in between the frame of said cylinder container and said air output element.

Preferably in said cleaning arrangement, said cylinder container is a tapered cylinder container. Preferably in said cleaning arrangement, said air output element comprises a pipe element and a tapered cylinder element.

Furthermore, the objects of the invention are achieved by a dust separation unit for an exhaust air ductwork, which dust separation unit comprises a cylinder container and a filtering unit, which said cylinder container has:
- an air inlet suitably arranged in a certain angle at the side of the cylinder container,
- a certain amount of separator liquid, e.g. water or purification liquid arranged at the bottom of the cylinder container, and
- an air output element arranged at the top centre of the cylinder container;
so that dust in the dusty air stream is adhered to evaporated separator liquid droplets in an intense turbulent air stream generated in between the frame of said cylinder container and said air output element.

Preferably, said cylinder container is a tapered cylinder container. Preferably, said air output element comprises a pipe element and a tapered cylinder element. Alternatively, said air output element comprises a pipe element and a right cylinder element. Alternatively, said air output element comprises a tapered cylinder air output element or a taper curved cylinder air output element.

Preferably, said filtering unit comprises one or more filtering elements, e.g. pre-filtering elements and/or fine filtering elements, said filtering unit having a height between 300-1200 mm, typically 600 mm, and a length and a width between 300mm x 300mm - 1200mm x 1200mm, typically 600mm x 600mm.

Preferably, said cylinder container has a height between 500-2000 mm, typically 700-1200 mm, and a diameter between 300-1200 mm, typically 600 mm. Preferably, the frame of said cylinder container has a transparent portion in the cylinder frame.

Preferably, said dust separation unit is realized as a movable dust separation unit. Alternatively, said dust separation unit is realized as a long time instalment dust separation unit or a permanent instalment dust separation unit.

Preferably, said dust separation unit is realized in a passenger vessel. Alternatively, said dust separation unit is realized in an industrial manufacturing facility or industrial laundry.

### BRIEF DESCRIPTION OF THE DRAWINGS

Figure 1 shows a side view of one embodiment of a dust separation unit according to the present invention;
Figure 2 shows a top view of one embodiment of a dust separation unit according to the present invention.
Figure 3 shows a side view of another embodiment of a dust separation unit according to the present invention.
Figure 4 shows a side view of a third embodiment of a dust separation unit according to the present invention.
Figure 5 shows a side view of a fourth embodiment of a dust separation unit according to the present invention.
Figure 6 shows a side view of a fifth embodiment of a dust separation unit according to the present invention.
Figure 7 shows a side view of a sixth embodiment of a dust separation unit according to the present invention.

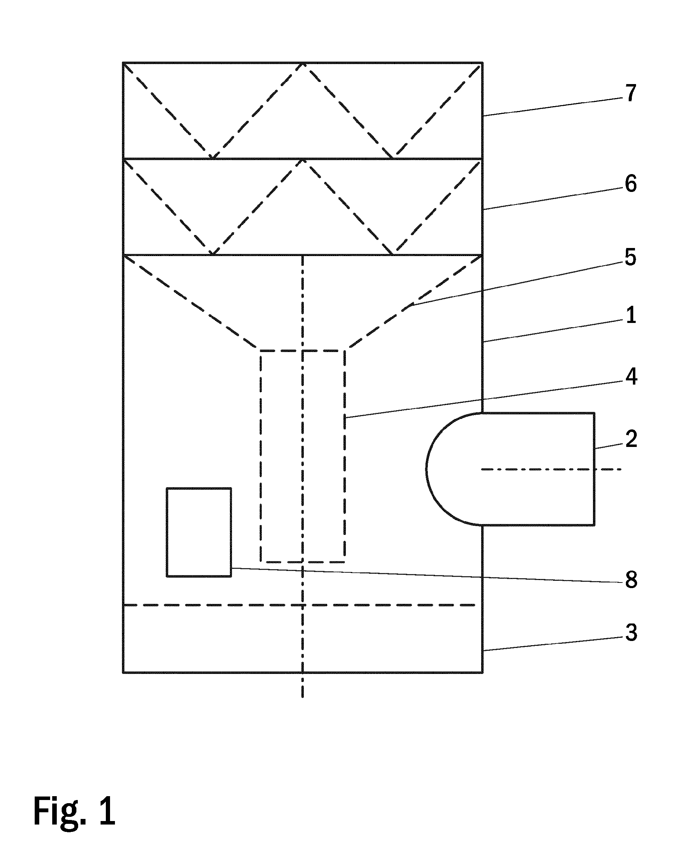

In the following the invention will be described in greater detail by means of preferred embodiments with reference to the accompanying drawings of Figures 1-7.

### DETAILED DESCRIPTION OF THE INVENTION

The arrangement for cleaning of an exhaust air ductwork has a duct channel and a suction fan for collecting the dusty air from said exhaust air ductwork. The arrangement for cleaning of an exhaust air ductwork has also a dust separation unit to which the dusty air is blown into.

Figure 1 shows a side view of one embodiment of a dust separation unit according to the present invention. The dust separation unit according to the present invention comprises a cylinder container 1 which cylinder container 1 has an air inlet 2 suitably arranged in a certain angle at the side of the cylinder container 1. The dusty air from the exhaust air ductwork is blown into the cylinder container 1 via the air inlet 2. The cylinder container 1 of the dust separation unit according to the present invention has a certain amount of separator liquid 3 e.g. water 3 or any other suitable separator liquid 3 e.g. purification liquid 3 arranged at the bottom of the cylinder container 1. The cylinder container 1 of the dust separation unit according to the present invention has an air output element 4, 5 arranged at the top centre of the cylinder container 1. In this embodiment the air output element 4, 5 of the dust separation unit comprises a pipe element 4 and a tapered cylinder element 5. The dust separation unit according to the present invention also comprises a filtering unit 6, 7. The filtering unit 6, 7 may comprise a pre-filtering element 6 and a fine filtering element 7.

In the dust separation unit according to the present invention the dusty air from the exhaust air ductwork is blown into the cylinder container 1 at the certain velocity so that an intense turbulent air stream is generated in between the frame of the cylinder container 1 and the air output element 4, 5 arranged at the centre of the cylinder container 1. The intense turbulent air stream causes the separator liquid 3 e.g. water 3 at the bottom of the cylinder container 1 to evaporate and get sucked into the air stream. The dust in the dusty air stream adheres to the separator liquid droplets in the air stream and thereafter sticks to frame of the cylinder container 1 and mixes with the separator liquid 3 e.g. water 3 at the bottom of the cylinder container 1. Thereafter the air goes out via the air output element 4, 5 to filtering unit 6, 7. The tapered cylinder element 5 part of the air output element 4, 5 reduces the air velocity and calms the turbulence before the air enters the filtering unit 6, 7. The dust free, clean air enters the surrounding premises from the filtering unit 6, 7 of the dust separation unit according to the present invention. The dust separation unit according to the present invention increases the filtering efficiency and the lifetime or the filtering unit 6, 7 substantially. The frame of the cylinder container 1 of the dust separation unit according to the present invention may have a transparent portion 8 in the cylinder frame. Said transparent portion 8 allows the user to view the proper functioning of the dust separation unit. The separated dust can be easily collected from the frame of the cylinder container 1.

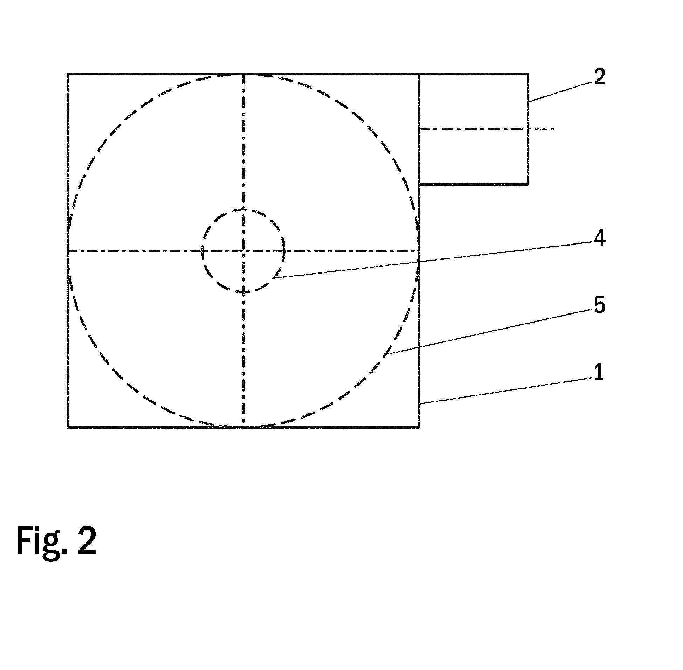

Figure 2 shows a top view of one embodiment of a dust separation unit according to the present invention. The dust separation unit according to the present invention shown in Figure 2 comprises a cylinder container 1 having an air inlet 2 suitably arranged in a certain angle at the side of the cylinder container 1. The cylinder container 1 of the dust separation unit according to the present invention has an air output element 4, 5 arranged at the top centre of the cylinder container 1. In this embodiment the air output element 4, 5 of the dust separation unit comprises a pipe element 4 and a tapered cylinder element 5.

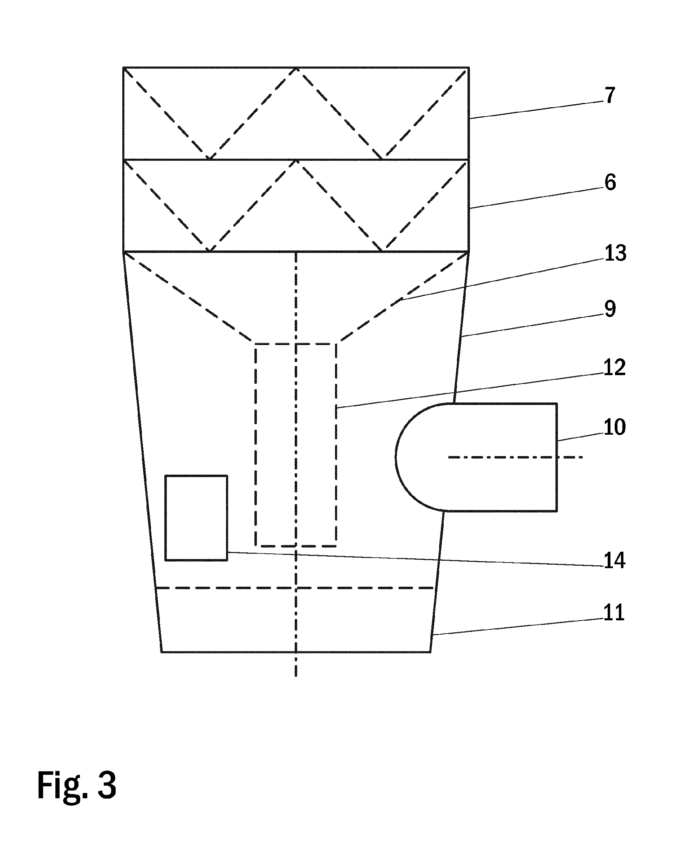

Figure 3 shows a side view of another embodiment of a dust separation unit according to the present invention. Another embodiment of a dust separation unit according to the present invention comprises a cylinder container 9 which is a tapered cylinder container 9. The tapered cylinder container 9 has an air inlet 10 suitably arranged in a certain angle at the side of the cylinder container 9, a certain amount of separator liquid 11 e.g. water 11 or any other suitable separator liquid 11 e.g. purification liquid 11 arranged at the bottom of the cylinder container 9 and an air output element 12, 13 arranged at the top centre of the cylinder container 9. In this embodiment the air output element 12, 13 of the dust separation unit comprises a pipe element 12 and a tapered cylinder element 13. Another embodiment of a dust separation unit according to the present invention also comprises a filtering unit 6, 7. The filtering unit 6, 7 may comprise a pre-filtering element 6 and a fine filtering element 7.

In the dust separation unit according to the present invention the dusty air from the exhaust air ductwork is blown into the cylinder container 9 via the air inlet 10 at the certain velocity so that an intense turbulent air stream is generated in between the frame of the cylinder container 9 and the air output element 12, 13. The form of the tapered cylinder container 9 enhances the intense turbulent air stream. The intense turbulent air stream causes the separator liquid 11 e.g. water 11 to evaporate and get sucked into the air stream. The dust in the dusty air stream adheres to the separator liquid droplets in the air stream and thereafter sticks to frame of the cylinder container 9 and mixes with the separator liquid 11 e.g. water 11. Thereafter the air enters the air output element 12, 13, where the tapered cylinder 13 part reduces the air velocity and calms the turbulence before the air goes out to filtering unit 6, 7 and thereafter enters the surrounding premises. The frame of the cylinder container 9 of the dust separation unit according to the present invention may have a transparent portion 14 in the cylinder frame. The separated dust can be easily collected from the frame of the cylinder container 9. The tapered cylinder container 9 may also be replaced by a taper curved cylinder container.

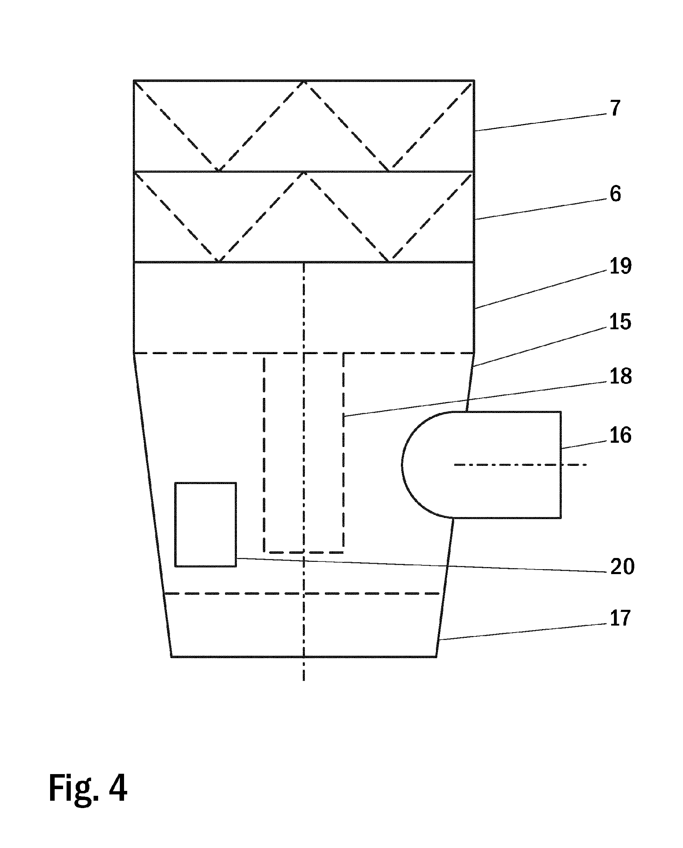

Figure 4 shows a side view of a third embodiment of a dust separation unit according to the present invention. The third embodiment of a dust separation unit according to the present invention comprises a cylinder container 15 which is a tapered cylinder container 15. The tapered cylinder container 15 has an air inlet 16 suitably arranged in a certain angle at the side of the cylinder container 15, a certain amount of separator liquid 17 e.g. water 17 or any other suitable separator liquid 17 e.g. purification liquid 17 arranged at the bottom of the cylinder container 15 and an air output element 18, 19 arranged at the top centre of the cylinder container 15. In this embodiment the air output element 18, 19 of the dust separation unit comprises a pipe element 18 and a right cylinder element 19. The third embodiment of a dust separation unit according to the present invention also comprises a filtering unit 6, 7. The filtering unit 6, 7 may comprise a pre-filtering element 6 and a fine filtering element 7.

In the dust separation unit according to the present invention the dusty air from the exhaust air ductwork is blown into the cylinder container 15 via the air inlet 16 at the certain velocity so that an intense turbulent air stream is generated in between the frame of the cylinder container 15 and the air output element 18, 19. The intense turbulent air stream causes the separator liquid 17 e.g. water 17 to evaporate and get sucked into the air stream. The dust in the dusty air stream adheres to the separator liquid droplets in the air stream and thereafter sticks to frame of the cylinder container 15 and mixes with the separator liquid 17 e.g. water 17. Thereafter the air enters the air output element 18, 19, where the right cylinder 19 part reduces the air velocity and calms the turbulence before the air goes out to filtering unit 6, 7 and thereafter enters the surrounding premises. The frame of the cylinder container 15 of the dust separation unit according to the present invention may have a transparent portion 20 in the cylinder frame. The separated dust can be easily collected from the frame of the cylinder container 15.

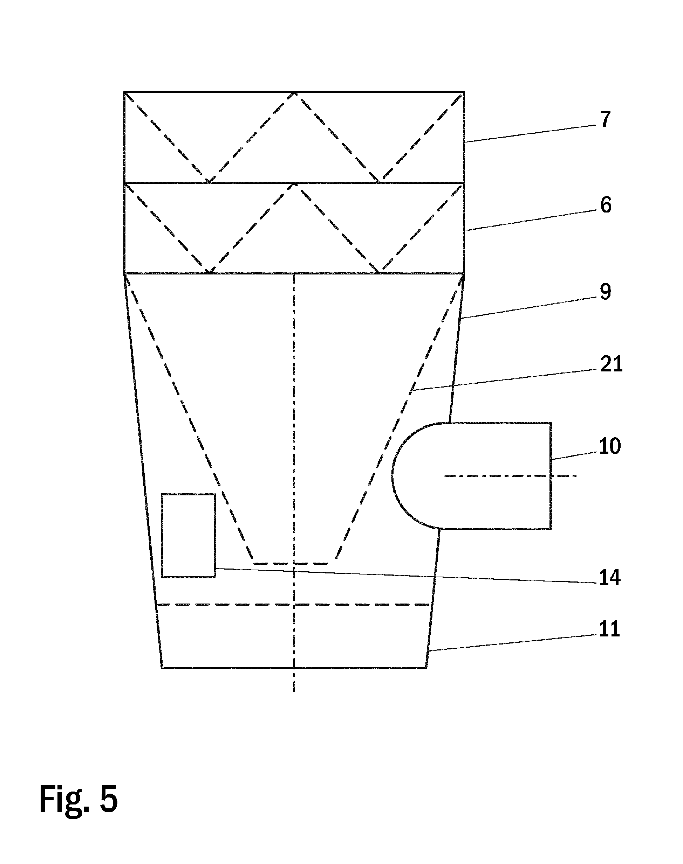

Figure 5 shows a side view of a fourth embodiment of a dust separation unit according to the present invention. The fourth embodiment of a dust separation unit according to the present invention comprises a cylinder container 9 which is a tapered cylinder container 9. The tapered cylinder container 9 has an air inlet 10 suitably arranged in a certain angle at the side of the cylinder container 9, a certain amount of separator liquid 11 e.g. water 11 or any other suitable separator liquid 11 e.g. purification liquid 11 arranged at the bottom of the cylinder container 9 and an air output element 21 arranged at the top centre of the cylinder container 9 and having a form of a tapered cylinder 21. The tapered cylinder air output element 21 may also be replaced by a taper curved cylinder air output element. The fourth embodiment of a dust separation unit according to the present invention also comprises a filtering unit 6, 7. The filtering unit 6, 7 may comprise a pre-filtering element 6 and a fine filtering element 7.

In the dust separation unit according to the present invention the dusty air from the exhaust air ductwork is blown into the cylinder container 9 via the air inlet 10 at the certain velocity so that an intense turbulent air stream is generated in between the frame of the cylinder container 9 and the air output element 21. The intense turbulent air stream causes the separator liquid 11 e.g. water 11 to evaporate and get sucked into the air stream. The dust in the dusty air stream adheres to the separator liquid droplets in the air stream and thereafter sticks to frame of the cylinder container 9 and mixes with the separator liquid 11 e.g. water 11. Thereafter the air enters the tapered cylinder air output element 21, which reduces the air velocity and calms the turbulence before the air goes out to filtering unit 6, 7 and thereafter enters the surrounding premises. The frame of the cylinder container 9 of the dust separation unit according to the present invention may have a transparent portion 14 in the cylinder frame. The separated dust can be easily collected from the frame of the cylinder container 9.

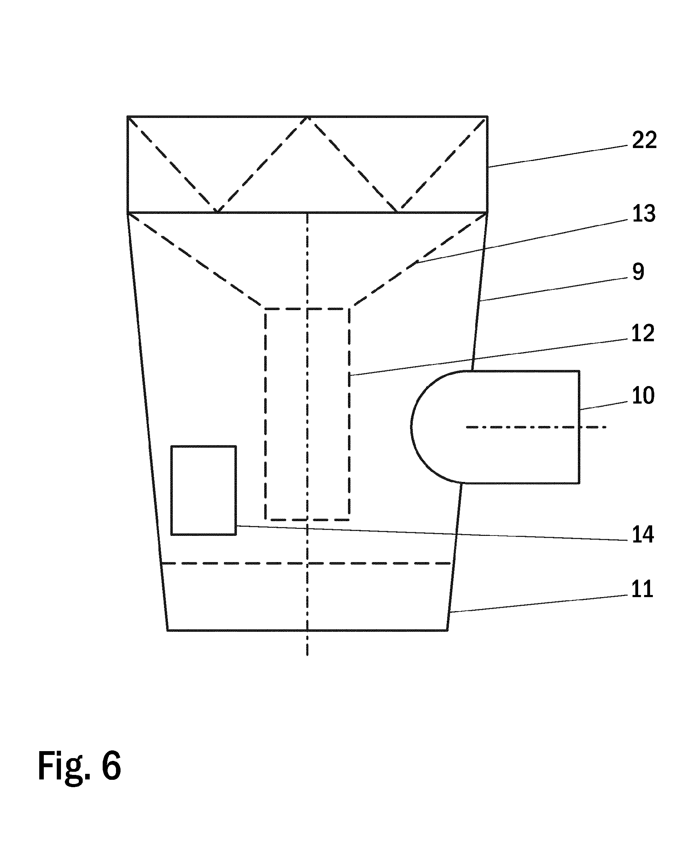

Figure 6 shows a side view of a fifth embodiment of a dust separation unit according to the present invention. The fifth embodiment of a dust separation unit according to the present invention comprises a tapered cylinder container 9 having an air inlet 10 suitably arranged in a certain angle at the side of the cylinder container 9, a certain amount of separator liquid 11 e.g. water 11 or any other suitable separator liquid 11 e.g. purification liquid 11 arranged at the bottom of the cylinder container 9 and an air output element 12, 13 arranged at the top centre of the cylinder container 9. In this embodiment the air output element 12, 13 of the dust separation unit comprises a pipe element 12 and a tapered cylinder element 13. The fifth embodiment of a dust separation unit according to the present invention also comprises a filtering unit 22. In the dust separation unit according to the present invention the dusty air from the exhaust air ductwork is blown into the cylinder container 9 via the air inlet 10, cleaned by evaporated separator liquid droplets in an intense turbulent air stream. Thereafter the air enters the air output element 12, 13, where the tapered cylinder 13 part reduces the air velocity and calms the turbulence before the air goes out to filtering unit 22 and thereafter enters the surrounding premises. The filtering unit 22 may only comprise one filtering element 22. The frame of the cylinder container 9 of the dust separation unit according to the present invention may have a transparent portion 14 in the cylinder frame.

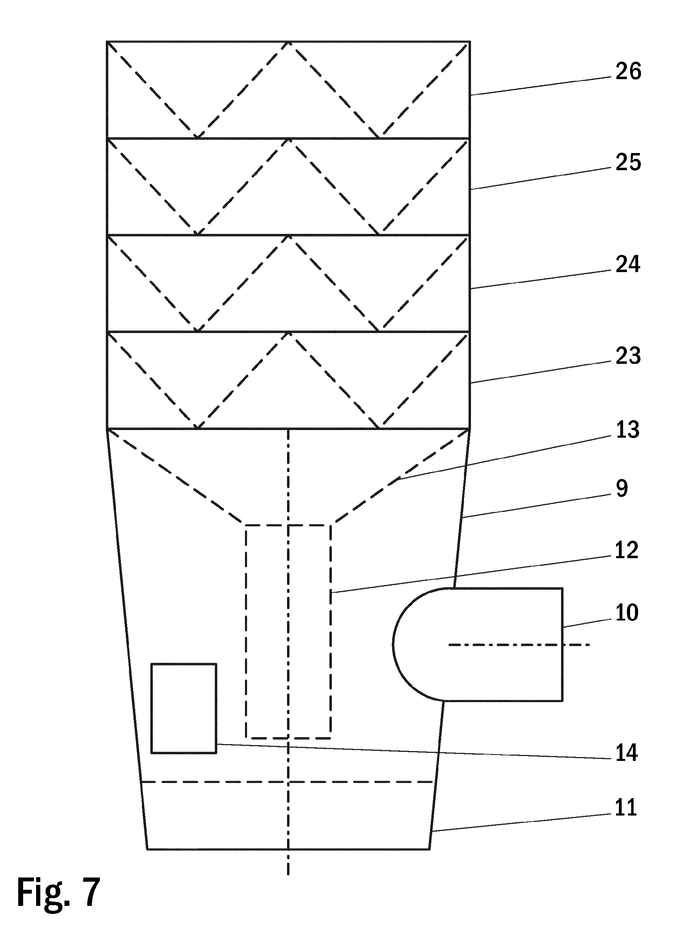

Figure 7 shows a side view of a sixth embodiment of a dust separation unit according to the present invention. The sixth embodiment of a dust separation unit according to the present invention comprises a tapered cylinder container 9 having an air inlet 10 suitably arranged in a certain angle at the side of the cylinder container 9, a certain amount of separator liquid 11 e.g. water 11 or any other suitable separator liquid 11 e.g. purification liquid 11 arranged at the bottom of the cylinder container 9 and an air output element 12, 13 arranged at the top centre of the cylinder container 9. In this embodiment the air output element 12, 13 of the dust separation unit comprises a pipe element 12 and a tapered cylinder element 13. The sixth embodiment of a dust separation unit according to the present invention also comprises a filtering unit 22. The filtering unit 23-26 may comprise pre-filtering elements and fine filtering elements. In the dust separation unit according to the present invention the dusty air from the exhaust air ductwork is blown into the cylinder container 9 via the air inlet 10, cleaned by evaporated separator liquid droplets in an intense turbulent air stream. Thereafter the air enters the air output element 12, 13, where the tapered cylinder 13 part reduces the air velocity and calms the turbulence before the air goes out to filtering unit 23-26 and thereafter enters the surrounding premises. The frame of the cylinder container 9 of the dust separation unit according to the present invention may have a transparent portion 14 in the cylinder frame.

The height of a typical filtering unit according to the present invention may range between 300-1200 mm, typically 600 mm. The height of a typical cylinder container of a dust separation unit according to the present invention may range between 500-2000 mm, typically 700-1200 mm. The length and the width of a typical filtering unit according to the present invention may range between 300mmx300mm-1200mmx1200mm, typically 600mmx600mm. The diameter of a typical cylinder container of a dust separation unit according to the present invention may range between 300-1200 mm, typically 600 mm.

With the help of the solution according to the present invention the cleaning of the exhaust air ductwork can be carried out without extra heat losses, caulking or sealing. With the help of the solution according to the present invention large amounts of dust can be bound to the separator liquid e.g. water. A wet dust takes only a fraction of the space of that of a dry dust. The physical size of the dust separation unit according to the present invention is very small in reference to the dust binding capacity of the dust separation unit.

With the help of the solution according to the present invention the lifetime and the filtering efficiency can be kept at a peak level for a longer time and thus substantially improved of the filtering units can be multiplied. The humidity of the exhaust air can be regulated by the regulating the amount of separator liquid at the bottom of the cylinder container. The separated dust can be easily collected from the frame of the cylinder container 9 and transported away hygienically. The cleaned air can be returned to the indoor premises.

The dust separation unit according to the present invention can be realized as a movable dust separation unit, which movable dust separation unit can easily be moved to different parts of the exhaust air ductwork that is cleaned. The dust separation unit according to the present invention can also be suited to be realized as a long time instalment dust separation unit or a permanent instalment dust separation unit in some exhaust air ductwork facilities. The cleaning apparatus and the dust separation unit according to the present invention can also be suited for cleaning of input air ductwork facilities.

With the help of the solution according to the present invention the exhaust air ductwork can easily be cleaned and the dust removed properly. The solution according to the present invention is especially well suited for difficult ventilation and air conditioning applications such as passenger vessels, industrial manufacturing facilities and industrial laundries.

## Claims

1. An arrangement for cleaning of an exhaust air ductwork, **characterized in that** said cleaning arrangement has a duct channel, a suction fan and a dust separation unit, said dust separation unit comprising a cylinder container (1), (9), (15) and a filtering unit (6-7), (22), (23-26), which said cylinder container (1), (9), (15) has:
- an air inlet (2), (10), (16) suitably arranged in a certain angle at the side of the cylinder container (1), (9), (15),
- a certain amount of separator liquid (3), (11), (17), e.g. water (3), (11), (17) or purification liquid (3), (11), (17) arranged at the bottom of the cylinder container (1), (9), (15), and
- an air output element (4-5), (12-13), (18-19), (21) arranged at the top centre of the cylinder container (1), (9), (15);
so that dust in the dusty air stream is adhered to evaporated separator liquid (3), (11), (17) droplets in an intense turbulent air stream generated in between the frame of said cylinder container (1), (9), (15) and said air output element (4-5), (12-13), (18-19), (21).

2. A cleaning arrangement according to claim 1, **characterized in that** said cylinder container (9) is a tapered cylinder container (9).

3. A cleaning arrangement according to claim 1 or claim 2, **characterized in that** said air output element (4-5), (12-13) comprises a pipe element (4), (12) and a tapered cylinder element (5), (13).

4. A dust separation unit for an exhaust air ductwork, **characterized in that** said dust separation unit comprises a cylinder container (1), (9), (15) and a filtering unit (6-7), (22), (23-26), which said cylinder container (1), (9), (15) has:
- an air inlet (2), (10), (16) suitably arranged in a certain angle at the side of the cylinder container (1), (9), (15),
- a certain amount of separator liquid (3), (11), (17), e.g. water (3), (11), (17) or purification liquid (3), (11), (17) arranged at the bottom of the cylinder container (1), (9), (15), and
- an air output element (4-5), (12-13), (18-19), (21) arranged at the top centre of the cylinder container (1), (9), (15);
so that dust in the dusty air stream is adhered to evaporated separator liquid (3), (11), (17) droplets in an intense turbulent air stream generated in between the frame of said cylinder container (1), (9), (15) and said air output element (4-5), (12-13), (18-19), (21).

5. A dust separation unit according to claim 4, **characterized in that** said cylinder container (9) is a tapered cylinder container (9).

6. A dust separation unit according to claim 4 or claim 5, **characterized in that** said air output element (12-13) comprises a pipe element (12) and a tapered cylinder element (13).

7. A dust separation unit according to claim 4 or claim 5, **characterized in that** said air output element (18-19) comprises a pipe element (18) and a right cylinder element (19).

8. A dust separation unit according to claim 4 or claim 5, **characterized in that** said air output element (21) comprises a tapered cylinder air output element (21) or a taper curved cylinder air output element.

9. A dust separation unit according to any one of claims 4 to 8, **characterized in that** said filtering unit (6-7), (22), (23-26) comprises one or more filtering elements, e.g. pre-filtering elements and/or fine filtering elements, said filtering unit (6-7), (22), (23-26) having a height between 300-1200 mm, typically 600 mm, and a length and a width between 300mm x 300mm - 1200mm x 1200mm, typically 600mm x 600mm.

10. A dust separation unit according to any one of claims 4 to 9, **characterized in that** said cylinder container (1), (9), (15) has a height between 500-2000 mm, typically 700-1200 mm, and a diameter between 300-1200 mm, typically 600 mm.

11. A dust separation unit according to any one of claims 4 to 10, **characterized in that** the frame of said cylinder container (1), (9), (15) has a transparent portion (8), (14), (20) in the cylinder frame.

12. A dust separation unit according to any one of claims 4 to 11, **characterized in that** said dust separation unit is realized as a movable dust separation unit.

13. A dust separation unit according to any one of claims 4 to 11, **characterized in that** said dust separation unit is realized as a long time instalment dust separation unit or a permanent instalment dust separation unit.

14. A dust separation unit according to any one of claims 4 to 13, **characterized in that** said dust separation unit is utilized in a passenger vessel.

15. A dust separation unit according to any one of claims 4 to 13, **characterized in that** said dust separation unit is utilized in an industrial manufacturing facility or industrial laundry.
